# EUROPÄISCHE PATENTSCHRIFT

(11) **EP 1 258 071 B1**
(45) Veröffentlichungstag und Bekanntmachung des Hinweises auf die Patenterteilung: **05.01.2005**
(21) Anmeldenummer: 01905761.1
(22) Anmeldetag: 10.02.2001
(51) Int. Cl.: H02K 1/16, H02K 3/24

(54) **HOCHSPANNUNG-ROTATIONSMASCHINE UND VERFAHREN ZUM KÜHLEN DER LEITER DIESER MASCHINE**
HIGH-VOLTAGE ELECTRIC ROTARY MACHINE AND A METHOD FOR COOLING THE CONDUCTORS OF SAID MACHINE
MACHINE A ROTATION HAUTE TENSION ET PROCEDE DE REFROIDISSEMENT DES CONDUCTEURS DE CETTE MACHINE

(30) Priorität: 25.02.2000 DE 10008807
(43) Veröffentlichungstag der Anmeldung: 20.11.2002
(73) Patentinhaber: Voith Siemens Hydro Power Generation GmbH & Co. KG, 89522 Heidenheim (DE)
(72) Erfinder: KULIG, Stefan, 46147 Oberhausen (DE); PEIER, Dirk, 44267 Dortmund (DE); SEDLAZECK, Klaus, 45481 Mülheim (DE)
(74) Vertreter: Dr. Weitzel & Partner
(86) Internationale Anmeldenummer: PCT/EP2001/001471
(87) Internationale Veröffentlichungsnummer: WO 2001/063725

(56) Entgegenhaltungen:
- EP-A- 0 493 704
- US-A- 4 333 027

## Beschreibung

Die Erfindung bezieht sich auf einen Hochspannungsgenerator, mit einem Stator und mit einer Statorwicklung, die eine Anzahl von Hochspannungsleitern aufweist. Die Erfindung bezieht sich weiterhin auf ein Verfahren zum Kühlen einer solchen elektrischen Rotationsmaschine.

Konventionelle elektrische Rotationsmaschinen, beispielsweise Turbogeneratoren, sind für eine relativ geringe Spannung von 10...25kV ausgelegt. Die Rotationsmaschine, auf die sich die vorliegende Erfindung bezieht, ist demgegenüber für Hochspannung ausgelegt. Unter Hochspannung wird hier der Bereich von 30 kV bis zu mehreren 100 kV verstanden. Ein solcher Hochspannungsgenerator ist insbesondere für die Netzspannung des Fernnetzes ausgelegt, also beispielsweise für 110 kV. Der entscheidende Vorteil des Hochspannungsgenerators ist darin zu sehen, dass er unmittelbar Strom in das Fernnetz einspeisen kann, ohne dass ein Transformator notwendig ist.

Ein wesentlicher Unterschied zwischen einem herkömmlichen Generator und dem Hochspannungsgenerator besteht in der Auslegung seiner Wicklung, insbesondere seiner Statorwicklung. Insbesondere betrifft dies die einzelnen Leiter, die im Falle von Hochspannungsgeneratoren als Hochspannungsleiter ausgebildet sind. Aufgrund der deutlich höheren Spannungen müssen diese Hochspannungsleiter eine prinzipiell andere Isolierung als die Leiter bei herkömmlichen Generatoren aufweisen. Die Hochspannungsleiter ähneln herkömmlichen Hochspannungskabeln und weisen in der Regel ein Bündel von Leitersträngen auf, die von einer entsprechenden Isolierung, insbesondere Kunststoffisolierung, umgeben sind.

Aufgrund der deutlich Höheren Spannungen erfordern Hochspannungsgeneratoren eine andere Konstruktion im Hinblick auf elektrische/magnetische Randbedingungen sowie im Hinblick auf die erforderliche Kühlung.

Aus der WO 97/45914 ist ein Kühlsystem für einen solchen Hochspannungsgenerator bekannt. Der Stator dieses Generators ist aus einzelnen segmentförmigen Blechen in Längsrichtung so geschichtet, dass sich in radialer Richtung erstreckende Nuten ausgebildet sind. In den Nuten verlaufen jeweils mehrere Hochspannungskabel, die in radialer Richtung nebeneinander angeordnet sind. Die Nut weist eine komplexe Geometrie auf, und zwar sind ihre Seitenwände durch eine Aneinanderreihung von zu den einzelnen Hochspannungsleitern korrespondierenden Wölbungen gebildet. Zwischen zwei solcher Nuten sind jeweils sich in axialer Richtung erstreckende Kühlkanäle vorgesehen. Die eigentliche, von einem Kühlmittel durchströmte Kühlleitung ist innerhalb des jeweiligen Kühlkanals geführt. Diese Ausgestaltung erfordert ein Einbettmaterial für die Kühlleitung, um einen guten thermischen Kontakt zwischen der Kühlleitung und dem jeweiligen zahnartigen Statorsegment zu erreichen.

Aus EP 0493704 A1 ist eine Elektrische Rotationsmaschine mit einem Stator und mit einer Statorwicklung bekannt, die eine Anzahl von Leitern aufweist die in einen Kühlmittelkanal angeordnet sind. Es wird auch offenbart, daß der Kühlmittelkanal sich in radialer Richtung nach aussen aufweitet und, daß mit zunehmender Breite des Kühlmittelkanals die Anzahl der darin senkrecht zur radialen Richtung nebeneinander angeordneten Hochspannungsleiter zunimmt.

Der Erfindung liegt die Aufgabe zugrunde, eine effiziente Kühlung für einen Hochspannungsgenerator zu gewährleisten.

Die Aufgabe wird gemäß der der Merkmale der Ansprüche 1-5 gelöst.

Durch die Anordnung der Hochspannungsleiter im Kühlmittelkanal ist eine unmittelbare Kühlung der einzelnen Hochspannungsleiter ermöglicht. Die Wärme wird direkt von einem durch den Kühlmittelkanal strömenden Kühlmittel abgeführt. Zwischen dem Kühlmittel und den Hochspannungsleitern sind also keine weiteren Bauteile zwischengeordnet, die die thermische Leitfähigkeit und damit die Kühlleistung beeinträchtigen.

Die Anordnung der Hochspannungsleiter im Kühlmittelkanal ist daher vergleichbar mit der aus WO 97/45914 bekannten Anordnung in einer Nut des Stators, mit dem entscheidenden Unterschied, dass bei dem bekannten Generator die Hochspannungsleiter nur indirekt gekühlt werden. Die Nut wird also als Kühlmittelkanal herangezogen. Die Hochspannungsleiter erstrecken sich dabei vorzugsweise in Axial- oder Längsrichtung des Generators und sind in radialer Richtung nebeneinander im Kühlmittelkanal angeordnet.

Für einen einfachen Aufbau des Stators ist dieser vorzugsweise in Statorsegmente unterteilt, die im Querschnitt gesehen einen Kreisring bilden, wobei jedes Statorsegment zumindest einen Kühlmittelkanal aufweist, in dem mehrere Hochspannungsleiter angeordnet sind. Durch die Anordnung der Kühlmittelkanäle in jedem einzelnen Segment ist eine effiziente und gleichmäßige Kühlung verwirklicht.

Vorzugsweise ist der Kühlmittelkanal als Kühlgaskanal ausgebildet, d.h. die Kühlung erfolgt beispielsweise mittels Luft oder insbesondere bei Turbogeneratoren auch mittels Wasserstoff. Ein solcher gasgekühlter Generator weist im Vergleich zu einem beispielsweise mit Öl gekühlten Generator Vorteile im Hinblick auf die Ausgestaltung des Kühlmittelkreislaufes auf.

Um eine besonders einfache konstruktive Ausgestaltung zu erreichen, weist in einer bevorzugten Ausführungsform der Kühlmittelkanal eine rechteckige Querschnittsgeometrie auf.

Um den innerhalb des Ständers verfügbaren Raum effektiv auszunutzen, weitet sich der Kühlmittelkanal in radialer Richtung nach außen. Im Sinne einer einfachen Ausführung erfolgt dies stufenförmig.

Dadurch ist ermöglicht, mit zunehmender Breite des Kühlmittelkanals die Anzahl der darin senkrecht zur radialen Richtung nebeneinander angeordneten Hochspannungsleiter zu erhöhen.

Die Aufgabe wird weiterhin gemäß der Erfindung gelöst durch ein Verfahren nach Anspruch 4.

Dieses Verfahren nutzt in vorteilhafter Weise den Kanal, in dem die Hochspannungskabel verlaufen, als Führung für ein Kühlmittel. Damit wird eine unmittelbare, effiziente und gleichmäßige Generatorkühlung gewährleistet.

Die im Hinblick auf die Rotationsmaschine erwähnten Vorteile und bevorzugten Ausführungsformen sind sinngemäß auf das Verfahren zu übertragen. Weitere vorteilhafte Ausgestaltungen des Verfahrens sind den Unteransprüchen zu entnehmen.

Ausführungsbeispiele der Erfindung werden im Folgenden anhand der Zeichnung 3 näher erläutert. Es zeigen jeweils in stark vereinfachten Darstellungen:
- FIG 1: einen Ausschnitt aus einem Querschnitt durch einen Generator,
- FIG 2: einen Kühlmittelkanal mit einem rechteckigen Querschnitt und mit innenliegenden Hochspannungsleitern und
- FIG 3: einen Kühlmittelkanal mit sich stufenförmig erweiterndem Querschnitt.

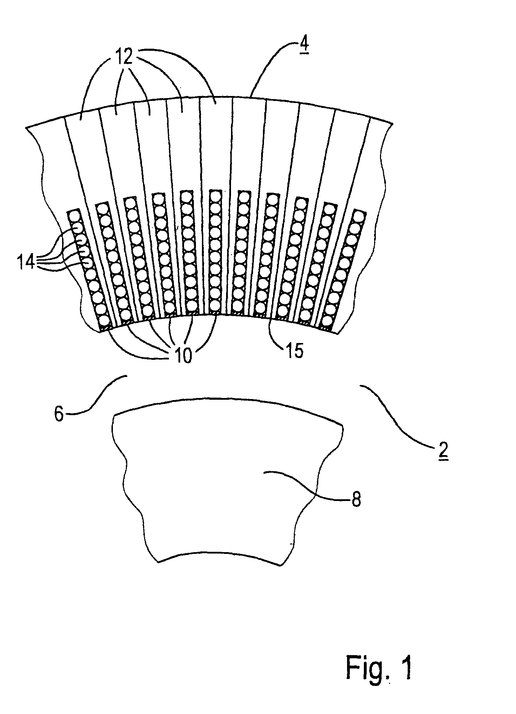

Gemäß der ausschnittsweisen, segmentartigen Darstellung eines Querschnitts durch einen als Hochspannungsgenerator ausgebildeten Generator 2 nach FIG 1 weist ein Generator 2 einen Stator 4 auf, der unter Bildung eines Luftspaltes 6 einen Rotor 8 kreisringartig umgibt. Der Stator 4 weist eine Anzahl von Nuten auf, die als Kühlmittelkanäle 10 ausgebildet sind. Diese verlaufen in Längsrichtung des Generators 2, d.h. sie verlaufen senkrecht zur Papierebene und erstrecken sich jeweils radial nach außen.

Jeder der Kühlmittelkanäle 10 ist innerhalb eines Statorsegments 12 angeordnet. Die einzelnen Statorsegmente 12 haben eine im Wesentlichen trapezförmige Querschnittsfläche. Die einzelnen Statorsegmente 12 bilden den ringförmigen Stator 4.

Innerhalb der Kühlmittelkanäle 10 sind jeweils eine Anzahl von Hochspannungsleitern 14 angeordnet. Diese verlaufen in Längsrichtung des Generators 2 durch den Stator 4 und sind in radialer Richtung innerhalb der Kühlmittelkanäle 10 nebeneinander angeordnet. Die Hochspannungsleiter 14 bilden also innerhalb eines Kühlmittelkanals 10 eine Reihe und lassen zwikkelförmige Querschnitte frei.

Die Kühlmittelkanäle 10 und somit die Reihen der Hochspannungsleiter 14 erstrecken sich beginnend von der rotorseitigen Innenseite 16 in radialer Richtung nach außen. Die Hochspannungsleiter 14 bilden die nicht weiter dargestellte Wicklung des Stators 4.

Zur Kühlung der Hochspannungsleiter 14 wird durch jeden der Kühlmittelkanäle 10 ein Kühlmittel, insbesondere ein Kühlgas geführt. Damit steht das Kühlmittel in unmittelbarem Kontakt mit der Außenfläche der Hochspannungsleiter 14 und bewirkt somit eine effiziente und vor allen Dingen gleichmäßige Kühlung der einzelnen Leiter. Als zusätzliche Kühlung können weitere an sich aus dem Stand der Technik bekannte Kühlleitungen vorgesehen sein, um den Stator 4 zu kühlen. Diese sind beispielsweise zwischen den einzelnen Kühlmittelkanälen 10 sowie sich radial an die Kühlmittelkanäle anschließend angeordnet.

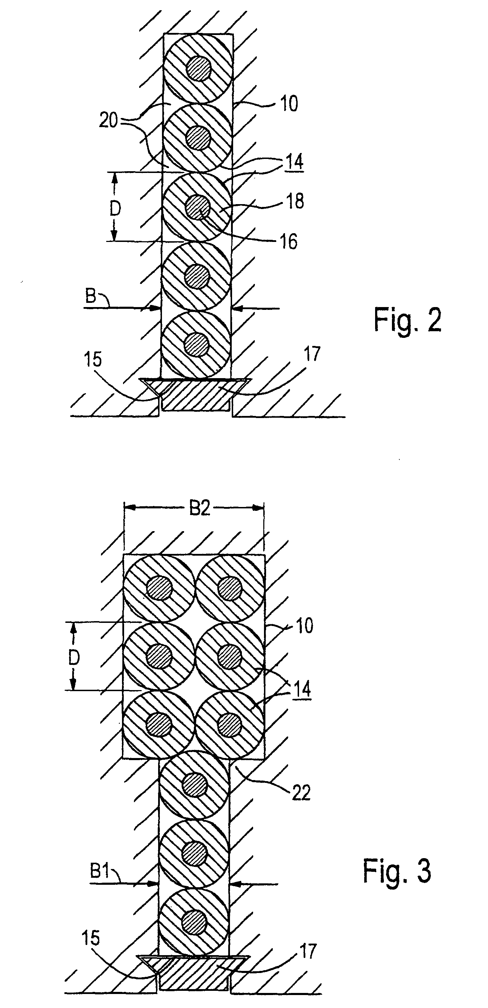

Im Unterschied zu dem bekannten Aufbau eines Hochspannungsgenerators, bei dem die Hochspannungsleiter 14 in zum Luftspalt 6 hin offenen Nuten angeordnet sind, sind gemäß der Ausführung nach FIG 1 die einzelnen Kühlmittelkanäle 10 zur Innenseite 16 abgeschlossen, um eine gezielte Kühlmittelführung zu ermöglichen. Die Kühlmittelkanäle 10 sind insbesondere durch Keile 17 dicht verschlossen, wie den FIG 2 und FIG 3 zu entnehmen ist.

Die aus WO 97/45914 bekannte komplexe Geometrie mit den gewölbten Seitenwänden kommt für die Kühlmittelkanäle 10 ebenfalls in Betracht. Die Ausgestaltung mit der rechteckigen Querschnittsfläche gemäß FIG 1 erlaubt jedoch in vorteilhafter Weise eine einfachere Herstellung und auch eine vergleichsweise einfache Berechnung der auftretenden magnetischen und/oder elektrischen Felder.

Die Vorteile der Anordnung der Hochspannungsleiter 14 in den Kühlmittelkanälen 10 bzw. die Vorteile der Ausgestaltung der bekannten Nuten als Kühlmittelkanäle 10 sind folgende: Auf weitere Kühlleitungen kann wegen der effizienten Kühlung verzichtet werden. Insbesondere ist eine Gaskühlung ausreichend und somit ist ein flüssiges Kühlmittel, wie Wasser oder Öl, nicht notwendig. Durch den direkten Kontakt des Kühlmittels mit der Kabeloberfläche ist weiterhin eine sichere und gleichmäßige Kühlung gewährleistet. Zudem ist der Freiraum zwischen den einzelnen Hochspannungsleitern 14 effizient genutzt. Die Ausbildung der Kühlmittelkanäle 10 als Rechteckkanäle stellt dabei in vorteilhafter Weise einen vergleichsweise großen Strömungsquerschnitt bereit, so dass eine hohe Kühlgasrate erreichbar ist.

Gemäß der vergrößerten Darstellung eines einzelnen Kühlmittelkanals 10 nach FIG 2, ist die Breite B des Kühlmittelkanals an den Durchmesser D der einzelnen Hochspannungsleiter 14 angepasst. Die Hochspannungsleiter 14 haben einen innenliegenden Kern 16, der vorzugsweise aus einem Bündel von einzelnen Leitersträngen gebildet ist. Der Kern 16 wird von einer Isolierung 18 umgeben, die vorzugsweise eine für Hochspannungskabel übliche Kunststoffisolierung ist. Die einzelnen Hochspannungsleiter 14 liegen innerhalb des Kühlmittelkanals 10 unmittelbar aneinander an. Zwischen ihnen und dem Kühlmittelkanal 10 sind einzelne Hohlräume 20 gebildet, durch die das Kühlmittel senkrecht zur Papierebene strömt.

Gemäß FIG 3 ist der Kühlmittelkanal 10 stufenförmig ausgebildet und zwar weitet er sich ausgehend von seiner rotorseitigen Innenseite 16 in radialer Richtung unter Bildung einer Stufe 22 nach außen. Die Breite B1 des Kühlmittelkanals 10 unterhalb der Stufe 22 ist an den Durchmesser D der Hochspannungsleiter 14 angepasst und die Breite B2 oberhalb der Stufe 22 ist an den doppelten Durchmesser D angepasst, so dass zwei Hochspannungsleiter 14 nebeneinander im Kühlmittelkanal 10 angeordnet werden können. Diese sich in radialer Richtung weitende Ausgestaltung des Kühlmittelkanals 10 gewährleistet eine effiziente Raumausnutzung im Stator 4. Anstatt der stufenartigen Ausgestaltung bei gleichbleibendem Durchmesser D der Hochspannungsleiter 14 kann die Raumausnutzung in einer Ausgestaltung die nicht Teil der Erfindung ist auch dadurch verwirklicht sein, dass sich der Kühlmittelkanal 10 kontinuierlich öffnet, und dass insbesondere zugleich der Durchmesser D der einzelnen Hochspannungsleiter 14 nach zunimmt.

Innerhalb der als Kühlmittelkanal 10 ausgebildeten Nut werden die Hochspannungsleiter vorzugsweise mit nicht dargestellten Halteelementen beispielsweise mit Klammern und mit Federelementen, festgelegt, um eine Relativbewegung der Hochspannungsleiter 14 untereinander und gegenüber dem Statorkörper infolge auf sie einwirkender Kräfte oder infolge von Vibrationen zu verhindern.

## Patentansprüche

1. Hochspannungsgenerator für Spannungen von mindestens 30 kV mit einem Stator (4) und mit einer Statorwicklung, die eine Anzahl von Hochspannungsleitern (14) aufweist, **dadurch gekennzeichnet, dass** ein Kühlmittelkanal (10) vorgesehen ist, in dem mehrere der Hochspannungsleiter (14) angeordnet sind und weiterhin dadurch, dass der Kühlmittelkanal (10) sich in radialer Richtung nach außen stufenförmig aufweitet, wobei mit zunehmender Breite (B) des Kühlmittelkanals (10) die Anzahl der darin senkrecht zur radialen Richtung nebeneinander angeordneten Hochspannungsleiter (14) zunimmt.

2. Maschine (2) nach Anspruch 1, **dadurch gekennzeichnet, dass** der Stator (4) - im Querschnitt gesehen - in einen Kreisring bildende Statorsegmente (12) unterteilt ist, und dass jedes der Statorsegmente (12) einen Kühlmittelkanal (10) aufweist, in dem mehrere der Hochspannungsleiter (14) angeordnet sind.

3. Maschine (2) nach Anspruch 1 oder 2, **dadurch gekennzeichnet, dass** der Kühlmittelkanal (10) als Kühlgaskanal ausgebildet ist.

4. Verfahren zum Kühlen eines Hochspannungsgenerators für Spannungen von mindestens 30 kV der einen Stator (4) mit einer Statorwicklung aufweist, die eine Anzahl von Hochspannungsleitern (14) umfasst, **dadurch gekennzeichnet, dass** die Hochspannungsleiter (14) unmittelbar von einem Kühlmedium gekühlt werden, wobei das Kühlmittel durch einen sich in radialer Richtung erstreckenden Kühlmittelkanal (10) geführt wird, in dem mehrere der Hochspannungsleiter (14) in radialer Richtung nebeneinander angeordnet sind, wobei sich der Kühlmittelkanal (10) in radialer Richtung nach außen Stufenförmig aufweitet und mit zunehmender Breite (B) des Kühlmittelkanals (10) die Anzahl der darin senkrecht zur radialen Richtung nebeneinander angeordneten Hochspannungsleiter (14) zunimmt.

5. Verfahren nach Anspruch 4, **dadurch gekennzeichnet, dass** als Kühlmedium ein Kühlgas herangezogen wird.

## Claims

1. A high-voltage generator for voltages of at least 30 kV with a stator (4) with a stator winding which comprises a number of high-voltage conductors (14), **characterized in that** a coolant conduit (10) is provided in which several high-voltage conductors (14) are arranged, and further **characterized in that** the coolant conduit (10) expands in a step-like manner outwardly in the radial direction, with increasing width (B) of the coolant conduit (10) the number of high-voltage conductors (14) increases which are arranged therein adjacently perpendicular to the radial direction.

2. A machine (2) as claimed in claim 1, **characterized in that** the stator (4), when seen in the cross section, is subdivided into stator segments (12) forming a circular ring, and that each of the stator segments (12) comprises a coolant conduit (10) in which several of the high-voltage conduits (14) are arranged.

3. A machine (2) as claimed in claim 1 or 2, **characterized in that** the coolant conduit (10) is arranged as a cooling gas conduit.

4. A method for cooling a high-voltage generator for voltages of at least 30 kV which comprises a stator (4) with a stator winding comprising a number of high-voltage conductors (14), **characterized in that** the high-voltage conductors (14) are directly cooled by a cooling medium, with the coolant being guided through coolant conduit (10) extending in the radial direction, in which several high-voltage conductors (14) are arranged adjacent to one another in the radial direction, with the coolant conduit (10) expanding outwardly in the radial direction in a step-like fashion and with increasing width (B) of the coolant conduit (10) the number of the high-voltage conduits (14) increases which are arranged therein adjacent to one another perpendicular to the radial direction.

5. A method as claimed in claim 4, **characterized in that** a cooling gas is used as a cooling medium.

## Revendications

1. Générateur haute tension pour des tensions d'au moins 30 kV, avec un stator (4) et un enroulement statorique comportant un nombre de conducteurs de haute tension (14), **caractérisé en ce qu'**est prévu un canal (10) pour le fluide de refroidissement dans lequel sont disposés plusieurs des conducteurs de haute tension et **en ce que** le canal (10) pour le fluide de refroidissement s'évase vers l'extérieur suivant la direction radiale en formant des gradins, le nombre de conducteurs de haute tension (14) disposés côte à côte perpendiculairement à la direction radiale augmentant à mesure que le canal (10) pour le fluide de refroidissement gagne en largeur (B).

2. Machine (2) selon la revendication 1, **caractérisée en ce que**, vu en coupe transversale, le stator (4) est divisé en segments (12) formant un anneau circulaire et que chacun des segments (12) du stator comporte un canal (10) pour le fluide de refroidissement dans lequel sont disposés plusieurs des conducteurs de haute tension (14).

3. Machine (2) selon la revendication 1 ou 2, **caractérisée en ce que** le canal (10) pour le fluide de refroidissement est conformé sous forme de canal pour un gaz réfrigérant.

4. Procédé pour le refroidissement d'un générateur haute tension pour des tensions d'au moins 30 kV comportant un stator (4) avec un enroulement statorique comprenant un nombre de conducteurs de haute tension (14), **caractérisé en ce que** les conducteurs de haute tension (14) sont refroidis directement par un fluide de refroidissement, le fluide de refroidissement étant véhiculé dans un canal (10) pour fluide de refroidissement qui s'étend suivant la direction radiale et dans lequel sont disposés côte à côte en direction radiale plusieurs des conducteurs de haute tension (14), le canal (10) pour le fluide de refroidissement s'évasant vers l'extérieur suivant la direction radiale en formant des gradins et le nombre de conducteurs de haute tension (14) disposés côte à côte perpendiculairement à la direction radiale augmentant à mesure que le canal (10) pour le fluide de refroidissement gagne en largeur (B).

5. Procédé selon la revendication 4, **caractérisé en ce que** le fluide de refroidissement utilisé est un gaz réfrigérant.
